(19) Europäisches Patentamt
European Patent Office
Office européen des brevets

(11) **EP 3 579 224 A1**

(12) **EUROPEAN PATENT APPLICATION**
published in accordance with Art. 153(4) EPC

(43) Date of publication:
**11.12.2019 Bulletin 2019/50**

(21) Application number: **18747423.4**

(22) Date of filing: **02.02.2018**

(51) Int Cl.:
**G10K 11/16** *(2006.01)* **B32B 5/26** *(2006.01)*
**G10K 11/168** *(2006.01)*

(86) International application number:
**PCT/JP2018/003659**

(87) International publication number:
**WO 2018/143430 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **03.02.2017 JP 2017018859**

(71) Applicants:
• **JNC Corporation**
**Chiyoda-ku**
**Tokyo 100-8105 (JP)**

• **JNC Fibers Corporation**
**Tokyo 100-0004 (JP)**

(72) Inventors:
• **HATTORI, Takayuki**
**Moriyama-shi, Shiga 524-0001 (JP)**
• **NISHIJIMA, Masaru**
**Moriyama-shi, Shiga 524-0001 (JP)**

(74) Representative: **Becker Kurig Straus**
**Patentanwälte**
**Bavariastrasse 7**
**80336 München (DE)**

(54) **LAMINATE SOUND-ABSORBING MATERIAL INCLUDING ULTRAFINE FIBER**

(57) The present invention addresses the problem of providing a sound-absorbing material exhibiting excellent sound absorption in a low-frequency region as well as having excellent space-saving properties. A laminate sound-absorbing material including a plurality of fiber layers and substrate layers interposed between the fiber layers, wherein the laminate sound-absorbing material includes at least three fiber layers, each fiber layer comprises fibers having a fiber diameter of less than 450 nm and has a weight of 0.1-50 g/m², the substrate layer has a weight of 1 g/m² and a thickness of 0.1 mm or greater, and the substrate layer is at least one substrate selected from the group consisting of a nonwoven fabric, a film, glass fibers, and paper.

FIG. 1

**Description**

**Technical Field**

The invention relates to a sound-absorbing material with laminated structure, which is formed with containing ultrafine fibers.

**Background Art**

A term "sound-absorbing material" means a product having a function of absorbing sound, which is widely used in a construction field and an automobile field. As a material that forms the sound-absorbing material, use of a nonwoven fabric is publicly known. For example, Patent literature No. 1 discloses a conjugate nonwoven fabric web containing submicron fibers having a median diameter of less than 1 micrometer and microfibers having a median diameter of at least 1 micrometer. The conjugate nonwoven fabric web in Patent literature No. 1 is formed of mixing two kinds of fibers having different median diameters called the submicron fibers and the microfibers to form gradient of a mixing ratio in a thickness direction by changing the mixing ratio. As a typified embodiment, the art is disclosed, in which a microfiber flow is formed, and a submicron fiber flow is separately formed to be added to the microfiber flow, whereby a web formed of mixing different fibers can be formed.

Moreover, as a multilayer article having sound-absorbing property, Patent literature No. 2 discloses a material containing a support layer and a submicron fiber layer laminated on the support layer, in which the submicron fiber layer has a median fiber diameter of less than 1 micrometer and a mean fiber diameter in the range of 0.5 to 0.7 micrometers, and is formed by a melt film fibrillation method or electric field spinning method. Example in Patent literature No. 2, discloses a laminated article in which a polypropylene spunbond nonwoven fabric having a basis weight (weight per unit area) of 100 g/m$^2$ and a diameter of about 18 micrometers is applied as a support layer, and submicron polypropylene fibers having a basis weight of 14 to 50 g/m$^2$ and a mean fiber diameter of about 0.56 micrometers are laminated thereon. Moreover, another Example discloses a multilayer article in which electric field-spun polycaprolactone fibers having a basis weight of 6 to 32 g/m$^2$ and a mean fiber diameter of 0.60 micrometers are laminated on a polyester carded web having a basis weight of 62 g/m$^2$. In the multilayer article prepared in Examples, sound-absorbing property is measured, and the multilayer article is shown to have the sound-absorbing property superior to the sound-absorbing property of the support only.

Patent literature No. 3 discloses a laminated sound-absorbing nonwoven fabric that absorbs sound having both a low frequency and a high frequency, in which the nonwoven fabric contains a resonance film and at least another fiber material layer, and the resonance film is formed by a layer of nanofibers having a diameter of up to 600 nanometers and a surface weight (basis weight) of 0.1 to 5 g/m$^2$. Patent literature No. 3 discloses that the layer of nanofibers is typically created by electric field spinning, and a base material layer is a fiber fabric having a diameter of 10 to 45 micrometers and a basis weight of 5 to 100 g/m$^2$, and another layer may be further laminated thereon. Moreover, Patent literature No. 3 discloses that the laminate may be further laminated in order to arrive at an appropriate thickness and basis weight.

Patent literature No. 4 discloses a nonwoven fabric structure excellent in sound-absorption characteristics obtained by nanofibers. The nonwoven fabric structure in Patent literature No. 4 has features of containing a fiber body containing nanofibers having a fiber diameter of less than 1 micrometer, and having a thickness of the fiber body of 10 millimeters or more. Moreover, Patent literature No. 4 discloses that the fiber body may be supported on a support, and may have structure in which the fiber body and the support are repeatedly laminated. Example discloses that nanofibers are formed by a meltblown method, for example, and a layer of nanofiber body having a fiber diameter of 0.5 micrometer and a basis weight of 350 g/m$^2$ on a polypropylene spunlace nonwoven fabric being a support.

**Citation List**

**Patent Literature**

Patent literature No. 1: JP 2011-508113 A.
Patent literature No. 2: JP 2014-15042 A.
Patent literature No. 3: JP 2008-537798 A.
Patent literature No. 4: JP 2016-121426 A.

## Summary of Invention

### Technical Problem

As described above, nonwoven fabric laminates having various configurations have been studied as a sound-absorbing material, and use of ultrafine fibers called nanofibers having a fiber diameter of less than 1 micrometer and submicron fibers is also publicly known. However, a sound-absorbing material having superior sound-absorption characteristics, in particular, a sound-absorbing material that exhibits sound-absorption performance excellent in a region of relatively low frequency of 1,000 Hz or less, and is excellent in space-saving performance has been required. In view of the above-described situation, the invention is contemplated for providing a sound-absorbing material that exhibits sound-absorbing property excellent in a low-frequency region.

### Solution to Problem

The present inventors have diligently continued to conduct study for solving the problems described above. As a result, the present inventors have found that, in a laminated sound-absorbing material containing a base material layer and a fiber layer, the laminated sound-absorbing material containing at least three fiber layers having a fiber diameter and a basis weight in a specific range, and containing a base material layer having a basis weight and a thickness in a specific range between the fiber layers exhibits sound-absorbing property excellent in a low frequency region and is excellent in space-saving performance, and thus have completed the invention.

The invention has constitution as described below.

Item 1. A laminated sound-absorbing material, containing a plurality of fiber layers, and a base material layer existing between the fiber layer and the fiber layer, wherein the laminated sound-absorbing material contains at least three fiber layers, and each fiber layer is formed of fibers having a fiber diameter of less than 450 nanometers and a basis weight of 0.1 to 50 g/m$^2$, and the base material layer has a basis weight of 1 g/m$^2$ or more and a thickness of 0.1 millimeter or more, and the base material layer is at least one selected from the group of a nonwoven fabric, a film, a glass fiber and paper.

Item 2. The laminated sound-absorbing material according to item1, wherein the fiber layer has a basis weight of 0.1 g/m$^2$ to 25 g/m$^2$.

Item 3. The laminated sound-absorbing material according to item 1 or 2, wherein a base material contained in the base material layer is a nonwoven fabric formed of at least one kind selected from the group of polyethylene phthalate fibers, polybutylene terephthalate fibers, polyethylene fibers and polypropylene fibers, and a basis weight of the base material is 1 to 300 g/m$^2$.

Item 4. The laminated sound-absorbing material according to any one of items 1 to 3, wherein fibers that form the fiber layer are at least one kind selected from the group of polyvinylidene fluoride, nylon 6,6, polyacrylonitrile, polystyrene, polyurethane, polysulfone and polyvinyl alcohol.

Item 5. The laminated sound-absorbing material according to any one of items 1 to 4, wherein, when a sound absorption coefficient from 200 Hz to 3,200 Hz in a frequency x is measured at a 1 Hz interval in a method of measuring a sound absorption coefficient at normal incidence (200 to 1,000 Hz) and an obtained curve is taken as f(x), value S obtained by integrating the sound absorption coefficients from 200 Hz to 1,000 Hz is in a range that satisfies the following formula:

$$\mathrm{S}=\int_{200}^{1000} f(x)\,dx \;\geqq 170$$

Item 6. The laminated sound-absorbing material according to any one of items 1 to 4, wherein, when a sound absorption coefficient from 200 Hz to 3,200 Hz in a frequency x is measured at a 1 Hz interval in a method of measuring a sound absorption coefficient at normal incidence (200 to 1, 000 Hz) and an obtained curve is taken as f(x), value S obtained by integrating the sound absorption coefficients from 200 Hz to 1,000 Hz is in a range that satisfies the following formula:

$$\mathrm{S}=\int_{200}^{1000} f(x)\,dx \;\geqq 200$$

### Advantageous Effects of Invention

According to the invention having the constitution described above, a sound-absorbing material excellent in sound-absorption characteristics in a low-frequency region can be obtained. A laminated sound-absorbing material of the invention has a peak of sound-absorption characteristics in the range lower than the range of a conventional sound-absorbing material, and is excellent in sound absorption performance in the range of 1,000 Hz or less. In a construction field, most of daily life noise is reputedly in about 200 to about 500 Hz, and in an automotive field, road noise is reputedly in about 100 to about 500 Hz, and noise during acceleration and transmission change is reputedly in about 100 to about 2,000 Hz. The laminated sound-absorbing material of the invention is useful for measures for reducing such noise. Moreover, the laminated sound-absorbing material of the invention has a weight lighter than the weight of a sound-absorbing material formed of a porous material, a glass fiber or the like, and therefore weight reduction and space saving of a member can be achieved, and the sound-absorbing material is useful in the point as the sound-absorbing material in the automotive field.

**Brief Description of Drawings**

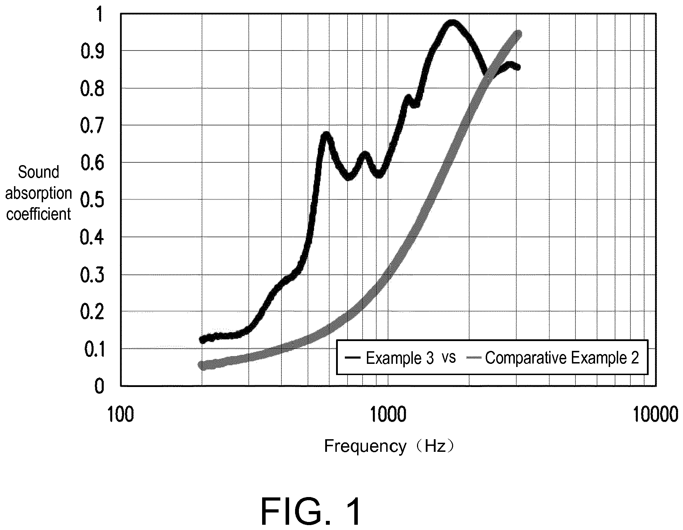

Fig. 1 shows a graph showing sound-absorption characteristics in Example (Example 3) and Comparative Example (Comparative Example 2) of the invention.

**Description of Embodiments**

The invention will be described in detail below.

**Structure of laminated sound-absorbing material**

A laminated sound-absorbing material of the invention is formed of containing a base material layer and a fiber layer. The laminated sound-absorbing material contains three or more fiber layers, and the base material layer is interposed between respective fiber layers.

The laminated sound-absorbing material contains three fiber layers, preferably three to six fiber layers, and further preferably three to four fiber layers. Each fiber layer may be one fiber structure, or may be in the form in which a plurality of fiber structures are stacked in one fiber layer.

Moreover, the base material layer is interposed between the fiber layers. Each base material layer may be formed of one base material, or may be in the form in which a plurality of base materials are stacked.

The fiber layer and the base material layer contained in the sound-absorbing material may be one kind for each, but two or more kinds of different fiber layers or base material layers may be contained therein. Moreover, as long as advantageous effects of the invention are not adversely affected, a configuration other than the fiber layer and the base material layer may be contained therein, and for example, a further fiber layer (may be one layer or two or more layers), a printed layer, a foam, foil, a mesh, a woven fabric or the like may be contained therein. Moreover, an adhesive layer, a clip, a suture or the like for connecting between respective layers may be contained therein.

Parts between the respective layers of the laminated sound-absorbing material may be physically and/or chemically adhered, or need not be adhered. The laminated sound-absorbing material may be in the form in which a part among a plurality of layers of the laminated sound-absorbing material may be adhered, and a part need not be adhered. For example, adhesion may be performed in a step of forming the fiber layer, or in a subsequent step, heating is performed to melt a part of fibers that form the fiber layer to fuse the fiber layer on the base material, whereby the fiber layer and the base material may be adhered. Moreover, an adhesive is provided on a surface of the base material or the fiber layer to overlay the base material layer or the fiber layer, whereby the parts between the layers are preferably adhered.

A thickness of the laminated sound-absorbing material is not particularly limited, as long as the advantageous effects of the invention can be obtained. For example, the thickness can be adjusted to 0.1 to 50 millimeters, preferably to 0.3 to 40 millimeters, and if the thickness is 0.3 to 35 millimeters, such a case is further preferred from a viewpoint of space-saving performance. In addition, the term "thickness of the laminated sound-absorbing material" typically means a total of the thicknesses of the fiber layer and the base material layer, in which, when an exterior body such as a cartridge and a lid is attached, the thickness of the part is excluded.

Air permeability of the laminated sound-absorbing material is not particularly limited, as long desired sound absorption performance can be obtained, and the air permeability can be adjusted to 10 to 1,000 $\mu$m/Pa·s, and if the air permeability is 10 to 500 $\mu$m/Pa·s, such a case is further preferred. The sound-absorbing material in which sound insulation performance is expected together with the sound absorption performances has been so far considered to be more difficult to pass sound as the air permeability is lower, namely more effective in the sound insulation performance. However, the laminated sound-absorbing material of the invention has high air permeability, whereby reflex of sound can be reduced, and the fiber layer excellent in sound-absorbing property is further adopted, whereby high sound-absorbing property can be obtained. In addition, the air permeability can be measured by a publicly-known method, for example, by a Gurley tester method.

The laminated sound-absorbing material is formed into a laminated structure in which the fiber layer is interposed between the base material layers. When the laminated sound-absorbing material is in such a form, a distance between the fiber layers (also referred to as the thickness of the base material layer, or an interlayer distance) is preferably 100 micrometers to 15 millimeters, and further preferably 100 micrometers to 10 millimeters. If the interlayer distance is 100 micrometers or more, the sound-absorption performance in a low frequency region becomes good, and if the interlayer distance is 15 millimeters or less, the thickness as the sound-absorbing material is not excessively increased, and is suitable for space-saving performance.

**Fiber layer**

The fiber layer contained in the sound-absorbing material of the invention is a layer formed of the fibers having a fiber diameter of less than 450 nanometers. The term "the fiber diameter of less than 450 nanometers" means that the mean fiber diameter is within the numerical range described above. If the fiber diameter is less than 450 nanometers, high sound-absorbing property can be obtained, and therefore such a case is preferred, and if the fiber diameter is less than 420 nanometers, higher sound-absorbing property can be obtained, and therefore such a case is further preferred. The fiber diameter can be measured by a publicly-known method. For example, the fiber diameter is expressed in terms of a value obtained by measurement or calculation from an enlarged photograph of a surface of the fiber layer, and a detailed measuring method will be described in detail in Examples .

With regard to the fiber layer contained in the sound-absorbing material of the invention, one fiber layer may be formed of one fiber structure, or a layer in which a plurality of fiber aggregates are contained in one fiber layer, and the layers in which the fiber aggregates are stacked may form one fiber layer.

In addition, the term "fiber aggregate" herein means the fiber aggregate formed into one continuous body to be formed on one layer of the base material. A basis weight of the fiber aggregate is preferably 0.1 to 25 g/m$^2$, and further preferably 0.3 to 20 g/m$^2$. If the basis weight is 0.1 g/m$^2$ or more, control of flow resistance by a density difference between the ultrafine fiber layer and the base fibers becomes good, and if the basis weight is less than 50 g/m$^2$, a risk of increasing warpage as the sound-absorbing material is reduced.

A fiber structure forming the fiber layer is preferably a nonwoven fabric, and is not particularly limited, as long as the nonwoven fabric has the fiber diameter and the basis weight in the above-described range, and is preferably a meltblown nonwoven fabric, a nonwoven fabric formed by an electric field spinning method or the like. According to the electric field spinning method, the ultrafine fibers can be efficiently laminated on the base material. A detail of the electric field spinning method will be described in a section of "production method."

A resin forming the fiber structure is not particularly limited, as long as the advantageous effects of the invention can be obtained, and examples thereof include polyolefin such as polypropylene and polyethylene, polyurethane, polylactic acid, an acrylic resin, polyesters such as polyethylene terephthalate and polybutylene terephthalate, nylons (amide resin) such as nylon 6, nylon 6, 6 and nylon 12, polyphenylene sulfide, polyvinyl alcohol, polystyrene, polysulfone, liquid crystal polymers, a polyethylene-vinyl acetate copolymer, polyacrylonitrile, polyfluorovinylidene and polyvinylidenefluoride-hexafluoropropylene. Among these, polyvinylidene fluoride, nylon 6,6, polyacrylonitrile, polystyrene, polyurethane, polysulfone and polyvinyl alcohol are further preferred in an electric field solution spinning method from a viewpoint of being soluble in various solvents.

The fiber structure preferably contains one kind of the above-described resins, and may contain two or more kinds.

Moreover, the fiber structure may contain various additives other than the resin. Specific examples of the additives that may be added to the resin include a filler, a stabilizer, a plasticizer, a sticky agent, an adhesion promoter (for example, silane and titanate), silica, glass, clay, talc, a pigment, a colorant, an antioxidant, a fluorescent brightener, an antibacterial agent, a surfactant, a flame retardant and a fluorinated polymer. One or more of the above-described additives may be used to reduce weight and/or cost of the resulting fibers and layers to adjust viscosity or to modify thermal characteristics of the fibers, or may provide the fibers or the layers with various physical characteristics derived from the characteristics of the additives, involving the characteristics related to electrical characteristics, optical characteristics, characteristics related to density and characteristics related to a liquid barrier or stickiness.

**Base material layer**

The base material layer in the laminated sound-absorbing material has the sound-absorbing property, and simultaneously a function of supporting the fiber layer to retain a shape of the sound-absorbing material as a whole. In the laminated sound-absorbing material of the invention, the fiber layer is formed of the fibers having a significantly fine fiber diameter of 10 nanometers to 450 nanometers, and therefore strength (rigidity) is low. Therefore, the base material layer substantially bears the strength of the laminated sound-absorbing material.

The base material layer may be formed of one layer of the base material, or may be formed in the form in which the plurality of base materials are stacked.

The base material that forms the base material layer is not particularly limited, as long as the fiber structure can be laminated at least on one surface of the base material layer, and a nonwoven fabric, a film, a glass fiber, paper, a woven fabric, a foam (foam layer), foil, a mesh or the like can be used. In particular, one or more kinds of any one of a nonwoven fabric, a film, a glass fiber and paper are preferred, and a nonwoven fabric is further preferred. The base material contained in the sound-absorbing material may be one kind, and preferably contains two or more kinds of base materials.

When the base material is the nonwoven fabric, as a kind of the nonwoven fabric, a meltblown nonwoven fabric, a spunlace nonwoven fabric, a spunbond nonwoven fabric, a through-air nonwoven fabric, a thermal bond nonwoven fabric, needle-punched non-woven fabric or the like can be used, and the above-described nonwoven fabric can be appropriately selected according to desired physical properties and functions.

As the resin forming the fibers of the nonwoven fabric, a thermoplastic resin can be used, and examples thereof include a polyolefin-based resin, a polyester-based resin such as polyethylene terephthalate and a polyamide-based resin. Specific examples of the polyolefin-based resin include a homopolymer of ethylene, propylene, butene-1 or 4-methylpentene-1, and a random or block copolymer of the above-described monomer with any other $\alpha$-olefin, namely one or more kinds of ethylene, propylene, butene-1, pentene-1, hexene-1, 4-methylpentene-1 or the like or a copolymer in combination of the olefins. Specific examples of the polyamide-based resin include nylon 4, nylon 6, nylon 7, nylon 11, nylon 12, nylon 6,6, nylon 6,10, polymetaxylylene adipamide, polyparaxylylene decanamide, polybiscyclohexylmethanedecane amide or copolymerized amide thereof. Specific examples of the polyester-based resin include polyethylene terephthalate, and also polytetramethylene terephthalate, polybutyl terephthalate, polyethylene oxybenzoate, poly (1,4-dimethylcyclohexane terephthalate), and a copolymer thereof. Among these, the fibers are preferably used in one kind or in combination of polyethylene terephthalate fibers, polybutylene terephthalate fibers, polyethylene fibers and polypropylene fibers.

Also when the base material is a film, a woven fabric or a mesh, a resin similar thereto can be used.

As fibers that form the nonwoven fabric of the base material, only one component can be used, but when an effect of fusion of intersections of thermo-bondable fibers with each other is taken into consideration, fibers formed of composite components of a low-melting point resin and a high-melting point resin, namely conjugate fibers formed of two or more components having different melting points can also be preferably used. Specific examples of a conjugate form include a sheath-core type, an eccentric sheath-core type, and a side-by-side type. Moreover, as the fibers that form the nonwoven fabric of the base material, combined fibers of two or more components having different melting points are preferably used, too. In addition, the term "combined fibers" means fibers in which fibers formed of a high-melting point resin and fibers formed of a low-melting point resin independently exist, and both the fibers are mixed to form the final product.

A fiber diameter of the fibers that form the nonwoven fabric of the base material is not particularly limited, but a material formed of the fibers having a fiber diameter of 0.5 micrometer to 1 millimeter can be used. The term "a fiber diameter of 0.5 micrometer to 1 millimeter" means that the mean fiber diameter is within the numerical range described above. If the fiber diameter is 0.5 micrometer or more, the flow resistance by the density difference between the ultrafine fiber layer and the base material layer can be controlled, and if the fiber diameter is less than 1 millimeter, general versatility is not lost and the fibers can also be easily obtained. If the fiber diameter is 1.0 to 100 micrometers, the flow resistance by the density difference between the ultrafine fiber layer and the base fibers can be controlled and the fibers can also be easily obtained, and therefore such a case is preferred. The fiber diameter can be measured in the same manner as in "measurement of fiber diameter of fiber layer."

The base material forms the base material layer interposed between the fiber layer and the fiber layer. Moreover, in addition to being interposed between the fiber layer and the fiber layer, the base material may be contained as two layers positioned on an outermost surface in the laminated sound-absorbing material. The base material may form the base material layer only by one layer, and two or more layers are also preferably continuously arranged to form one base material layer. Two or more layers of the base materials are continuously arranged, which has an advantage in which the interlayer distance between the fiber layers can be controlled by the thickness of the base material layer.

A basis weight of the base material only needs to be 1 $g/m^2$ or more, and is preferably 1 to 300 $g/m^2$, and is further preferably 15 to 300 $g/m^2$. If the basis weight of the base material is less than 1 $g/m^2$, such a thickness has a risk in which strength necessary for the sound-absorbing material cannot be obtained.

In the invention, the base material layer has a thickness of 0.1 millimeter or more. An upper limit of the thickness of the base material layer is not particularly limited, but is preferably 0.1 to 60 millimeters, and further preferably 0.1 to 30 millimeters from a viewpoint of space-saving performance.

A thickness of the base material that forms the base material layer can be adjusted to 20 micrometers to 20 millimeters, and further preferably 30 micrometers to 10 millimeters, for example. When the thickness of the base material is 20 micrometers or more, no wrinkles occur, handling is easy and productivity is good, and if the thickness of the base material is 20 millimeters or less, such a thickness has no risk of inhibiting the space-saving performance.

To the base material, various additives such as a colorant, an antioxidant, a light stabilizer, an ultraviolet light absorber, a neutralizing agent, a nucleating agent, a lubricant, an antibacterial agent, a flame retardant, a plasticizer, and any other thermoplastic resin may be added within the range in which the advantageous effects of the invention are not adversely affected. Moreover, a surface thereof may be treated with various finishing agents to provide the surface with a function such as hydrophobicity, antielectricity, surface smoothness and abrasion resistance.

**Sound-absorption characteristics of laminated sound-absorbing material**

The laminated sound-absorbing material of the invention has features of being excellent in the sound-absorbing property particularly in the low frequency region (frequency region of 1,000 Hz or less). The laminated sound-absorbing material of the invention exhibits sound-absorption characteristics different from a conventional sound-absorbing material, in which the laminated sound-absorbing material is excellent in the sound-absorbing property, particularly in the region of 400 Hz to 1,000 Hz. Although a mechanism is not bound by a specific theory, the laminated sound-absorbing material of the invention is considered to control flow resistance of a sonic wave by utilizing the density difference between the ultrafine fiber layer and the base material layer, resulting in obtaining the characteristics excellent in absorbency in the low frequency region.

A method of evaluating the sound-absorbing property will be described in more detail in Examples.

**Method of producing laminated sound-absorbing material**

A method of producing the laminated sound-absorbing material is not particularly limited, but the laminated sound-absorbing material can be obtained by the production method including: for example, a step of preparing a fiber laminate in which one layer of a fiber structure is formed on one layer of a base material; and a step of stacking a plurality of fiber laminates in predetermined order and the number of sheets to unite the laminates. In addition, in the step of stacking the fiber laminates, a further layer (for example, a further base material) other than the fiber laminate can be further added thereto to be laminated and stacked thereon.

When the nonwoven fabric is used as the base material, the nonwoven fabric may be produced and used by a publicly-known method, or a commercially available nonwoven fabric can also be selected and used. In the step of forming the fiber structure on the base material, an electric field spinning method is preferably used. The electric field spinning method is a method in which a spinning solution is jetted therefrom, and simultaneously an electric field is acted thereon to process the jetted spinning solution into fibers to obtain the fibers on a collector. Specific examples thereof include a method of extruding a spinning solution from a nozzle, and simultaneously acting an electric field thereon to cause spinning, a method in which a spinning solution is bubbled, and simultaneously an electric field is acted thereon to cause spinning, and a method in which a spinning solution is guided onto a surface of a cylindrical electrode, and simultaneously an electric field is acted thereon to cause spinning. In the invention, the nonwoven fabric or the like serving as the base material is inserted on the collector, whereby the fibers can be accumulated on the base material.

The spinning solution is not particularly limited, as long as the solution has spinnability, and such a solution can be used as a solution in which the resin is dispersed into the solvent, a solution in which the resin is dissolved into the solvent, and a solution in which the resin is melted by heat or irradiation with laser.

Specific examples of the solvent into which the resin is dispersed or dissolved include water, methanol, ethanol, propanol, acetone, N,N-dimethylformamide, N,N-dimethylacetamide, dimethyl sulfoxide, N-methyl-2-pyrrolidone, toluene, xylene, pyridine, formic acid, acetic acid, tetrahydrofuran, dichloromethane, chloroform, 1,1,2,2-tetrachloethane, 1,1,1,3,3,3-hexafluoroisopropanol, trifluoroacetic acid and a mixture thereof. A mixing ratio when such materials are mixed and used is not particularly limited, and can be appropriately set in view of spinnability and dispersibility to be required and physical properties of the fibers obtained.

For the purpose of improving stability of electric field spinning or fiber formability, a surfactant may be further incorporated into the spinning solution. Specific examples of the surfactant include an anionic surfactant such as sodium dodecyl sulfate, a cationic surfactant such as tetrabutylammonium bromide, and a nonionic surfactant such as polyoxyethylene sorbitan monolaurate. A concentration of the surfactant is preferably in the range of 5% by weight or less based on the spinning solution. If the concentration is 5% by weight or less, an improvement in an effect appropriate to the use can be obtained, and therefore such a case is preferred. Moreover, the spinning solution may contain a component other than the components described above as the component of the spinning solution within the range in which the advantageous effects of the invention are not adversely affected.

A method of preparing the spinning solution is not particularly limited, and specific examples thereof include a method such as stirring and ultrasonic treatment. Moreover, mixing order is not particularly limited, either, and the components may be mixed simultaneously or successively. A stirring time when the spinning solution is prepared by stirring is not particularly limited, as long as the resin is uniformly dissolved or dispersed in the solvent, and the resulting mixture may be stirred for about 1 to about 24 hours, for example.

In order to obtain the fibers by electric field spinning, viscosity of the spinning solution is adjusted preferably to the range of 10 to 10,000 cP, and further preferably to the range of 50 to 8,000 cP. If the viscosity is 10 cP or more, spinnability for forming the fibers is obtained, and if the viscosity is 10,000 cP or less, the spinning solution is easily jetted. If the viscosity is in the range of 50 to 8,000 cP, good spinnability is obtained in a wide range of spinning conditions, and therefore such a case is further preferred. The viscosity of the spinning solution can be adjusted by appropriately changing molecular weight or a concentration of the resin, or the kind or the mixing ratio of the solvent.

With regard to a temperature of the spinning solution, the solution can be spun at room temperature, or may be spun by heating or cooling the solution. Specific examples of the method for jetting the spinning solution include a method for jetting a spinning solution filled in a syringe from a nozzle by using a pump. An inner diameter of the nozzle is not particularly limited, and is preferably in the range of 0.1 to 1.5 millimeters. An amount of jetting the spinning solution is not particularly limited, and is preferably 0.1 to 10 mL/hr.

A method of acting the electric field thereon is not particularly limited, as long as the electric field can be formed between the nozzle and the collector. For example, a high voltage may be applied to the nozzle, and the collector may be grounded. A voltage to be applied thereto is not particularly limited, as long as the fibers are formed, and is preferably in the range of 5 to 100 kV. Moreover, a distance between the nozzle and the collector is not particularly limited, as long as the fibers are formed, and is preferably in the range of 5 to 50 centimeters.

A method of stacking a plurality of fiber laminates formed of two layers including the base material and the fiber structure obtained as described above to unite the laminates is not particularly limited, and the laminates may be only stacked without adhering the laminates, or various adhesion methods can also be employed, namely, thermocompression bonding by heated flat rolls or embossing rolls, adhesion with a hot melt agent or a chemical adhesive, thermal adhesion by circulating hot air or radiant heat or the like. Above all, from a viewpoint of suppressing deterioration of physical properties of the fiber layer containing the ultrafine fibers, heat treatment by circulating hot air or radiant heat is preferred. In the case of thermocompression bonding using the flat rolls or the embossing rolls, the laminate is damaged, such as melting of the fiber layer into film formation or occurrence of break in a peripheral part of an embossed point, whereby the method has a possibility in which stable production becomes difficult, and also performance reduction such as reduction of sound absorption characteristics is easily caused. Moreover, in the case of adhesion by the hot melt agent or the chemical adhesive, a space between the fibers in the fiber layer is buried with the component, whereby performance reduction is easily caused in several cases. On the other hand, when the laminates are united by heat treatment using circulating hot air or radiant heat, the damage to the fiber layer is less, and the laminates can be united with sufficient delamination strength, and therefore such a case is preferred. When the laminates are united by heat treatment using circulating hot air or radiant heat, the nonwoven fabric formed of thermo-fusible conjugate fibers and the laminate are preferably used, although the material is not particularly limited thereto.

## Examples

Examples described below are merely for illustrative purposes only. A scope of the invention is not limited to the present Examples.

Measuring methods and definitions of values of physical properties shown in Examples are described below.

**Mean fiber diameter**

Ultrafine fibers were observed using a scanning electron microscope SU8020 made by Hitachi High-Technologies Corporation to measure diameters of 50 ultrafine fibers using image analysis software. A mean value of the fiber diameters of 50 ultrafine fibers was taken as a mean fiber diameter.

**Measurement of sound absorption coefficient**

With regard to measurement of a sound absorption coefficient, a sample having a diameter of 63 mm was taken from each fiber laminate, and the resulting samples were laminated under respective conditions, and then a sound absorption coefficient at normal incidence was measured when a plane acoustic wave was perpendicularly entered on a test piece at a frequency of 200 to 3,200 Hz by using an instrument for measuring sound absorption coefficient at normal incidence "TYPE 4206 made by Bruel & Kjar Sound & Vibration Measurement A/S" in accordance with ASTM E 1050

**Sound-absorbing property in low frequency region**

when a sound absorption coefficient from 200 Hz to 3,200 Hz in a frequency x was measured at a 1 Hz interval, and the obtained curve was taken as f(x), integrated value S of the sound absorption coefficients from 200 Hz to 3,200 Hz was obtained by the following formula:

$$S = \int_{200}^{1000} f(x)\, dx$$

The integrated value S indicates sound absorption performance in the frequency range of 200 to 1,000 Hz, and if a numerical value is large, the sound-absorbing property is judged to be high. When the value S was more than 170, the sound-absorbing property in a low frequency region was evaluated to be good, and when the value S was less than 170, the sound-absorbing property was evaluated to be poor.

**Air permeability**

Air permeability was measured by using a GARE-type densometer made by Toyo Seiki Co., Ltd. (model: GB-3C) in accordance with ISO 5636.

**Example 1**

A polyurethane resin (grade name: T1190) made by DIC Bayer Polymer Ltd. was dissolved into a cosolvent of N,N-dimethylformamide and acetone (60/40 (w/w)) at a concentration of 15% by mass to prepare an electrospinning solution. A polyethylene terephthalate through-air nonwoven fabric having a basis weight of 18 g/m$^2$ and a width of 1,000 mm was arranged as base material nonwoven fabric B (thickness: 60 $\mu$m), and electric field spinning of the polyurethane solution was performed thereon to prepare a fiber laminate formed of two layers including the base material nonwoven fabric and a polyurethane ultrafine fiber structure.

Conditions of electric field spinning were adjusted, in which a 27 G needle was used, a single-bore solution feed rate was 2.0 mL/h, an applied voltage was 47 kV, and a spinning distance was 20 cm.

With regard to polyurethane ultrafine fibers in the obtained fiber laminate, a basis weight in the layer was 20.0 g/m$^2$, a mean fiber diameter was 420 nm and a melting temperature was 175°C.

The obtained fiber laminate formed of two layers was punched into a piece having a diameter of 63 mm, and three sheets of the resulting fiber laminates and base material nonwoven fabrics B were used, and stacked so as to form a structure: "ultrafine fiber structure/base material B/base material B/ultrafine fiber structure/base material B/base material B/ultrafine fiber structure." The obtained sample was taken as a sample for measuring a sound absorption coefficient (interlayer distance: 0.12 mm). Three ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 180.6, which was good.

**Example 2**

An electric field spinning solution was prepared in the same manner as in Example 1. Next, a carded through-air nonwoven fabric having a basis weight of 200 g/m$^2$, a thickness of 5 mm and a width of 1,000 mm (in which, sheath-core thermo-fusible conjugate fibers of high density polyethylene and polypropylene as a sheath and a core and having a fiber diameter of 22 $\mu$m were used) was arranged as a base material nonwoven fabric, and electric field spinning of the polyurethane solution was performed thereon to prepare a fiber laminate formed of two layers including the base material nonwoven fabric and a polyurethane ultrafine fiber structure. Operation was performed in the same manner as in Example 1 except that three sheets of the thus obtained fiber laminates and base material nonwoven fabric A were used, and stacked so as to form a structure: "ultrafine fiber structure/base material A/base material A/ultrafine fiber structure/base material A/base material A/ultrafine fiber structure," and the resulting material was taken as a sample for measuring a sound absorption coefficient (interlayer distance: 10 mm). Three ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 322.6, which was good.

**Example 3**

Kynar (trade name) 3120 being a polyvinylidene fluoride-hexafluoropropylene (hereinafter, abbreviates as "PVDF-HFP") resin made by Arkema Corporation was dissolved into a cosolvent of N,N-dimethylacetamide and acetone (60/40 (w/w)) at a concentration of 18% by mass to prepare an electric field spinning solution. Base material nonwoven fabric A was arranged, and electric field spinning of the PVDF-HFP solution was performed thereon to prepare a fiber laminate formed of two layers including base material nonwoven fabric A and PVDF-HFP ultrafine fibers.

Conditions of electric field spinning were adjusted, in which a 24 G needle was used, a single-bore solution feed rate was 3.0 mL/h, an applied voltage was 35 kV, and a spinning distance was 17.5 cm.

With regard to the obtained PVDF-HFP ultrafine fibers in the fiber laminate formed of two layers, a basis weight in the layer was 24.0 g/m$^2$, a mean fiber diameter was 300 nm and a melting temperature was 168°C. Operation was performed in the same manner as in Example 2 except that three sheets of the fiber laminates formed of two layers of a base material nonwoven fabric and the PVDF-HFP ultrafine fibers, and base material A were used, and stacked so as to form a structure: "ultrafine fiber structure/base material A/base material A/ultrafine fiber structure/base material A/base material layer A/ultrafine fiber structure," and the resulting material was taken as a sample for measuring a sound absorption coefficient (interlayer distance: 10 mm). Three ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 359.8, which was good.

In addition, a graph of sound-absorption characteristics in Example 3 and Comparative Example 2 is shown in Fig. 1. While a frequency showing the largest sound absorption coefficient was around 1,800 Hz in Example 3 (black line), a peak of sound absorption was found in a higher frequency region in Comparative Example 2.

## Example 4

A polyurethane resin (grade name: T1190) made by DIC Bayer Polymer Ltd. was dissolved into a cosolvent of N,N-dimethylformamide and acetone (60/40 (w/w)) at a concentration of 15% by mass to prepare an electric field spinning solution. Base material nonwoven fabric A was arranged, and electric field spinning of the polyurethane solution was performed thereon to prepare a fiber laminate formed of two layers including the base material nonwoven fabric and polyurethane ultrafine fibers.

Conditions of electric field spinning were adjusted, in which a 27 G needle was used, a single-bore solution feed rate was 2.0 mL/h, an applied voltage was 47 kV, and a spinning distance was 20 cm. With regard to the polyurethane ultrafine fibers in the fiber laminate, a basis weight in the layer was 10.0 g/m$^2$, a mean fiber diameter was 420 nm and a melting temperature was 175°C.

Three sheets of the fiber laminates and base material nonwoven fabric A were used, and stacked so as to form a structure: "ultrafine fiber structure/base material A/base material A/ultrafine fiber structure/base material A/base material layer A/ultrafine fiber structure," and the resulting material was taken as a sample for measuring a sound absorption coefficient (interlayer distance: 10 mm). Three ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 258.5, which was good.

## Example 5

Three sheets of the fiber laminates formed of two layers including the base material nonwoven fabric and the polyurethane ultrafine fibers obtained in Example 2, and a carded through-air nonwoven fabric (base material A) were used, and stacked so as to form a structure: "base material A/ultrafine fiber structure/base material A/base material A/ultrafine fiber structure/base material A/base material layer A/ultrafine fiber structure/base material A," and the resulting material was taken as a sample for measuring a sound absorption coefficient (interlayer distance: 10 mm). Three layers of aggregates of ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 321.2, which was good.

## Example 6

Kynar 3120 being a PVDF-HFP resin was dissolved into a cosolvent of N,N-dimethylacetamide and acetone (60/40 (w/w)) at a concentration of 15% by mass to prepare an electric field spinning solution. Base material nonwoven fabric A was arranged, and electric field spinning of the solution was performed thereon in the same manner as in Example 3 to prepare a fiber laminate formed of two layers including base material nonwoven fabric A and PVDF-HFP ultrafine fibers. With regard to the PVDF-HFP ultrafine fibers in the obtained fiber laminate, a basis weight in the layer was 1.0 g/m$^2$, a mean fiber diameter was 180 nm and a melting temperature was 168°C.

The fiber laminate was punched into a circular form having a diameter of 63 mm, and three sheets of the fiber laminates and a carded through-air nonwoven fabric (base material A) having a basis weight of 200 g/m$^2$, a thickness

of 5 mm and a width of 1,000 mm were stacked so as to form a structure: "ultrafine fiber structure/base material A/base material A/ultrafine fiber structure/base material A/base material layer A/ultrafine fiber structure," and the resulting material was taken as a sample for measuring a sound absorption coefficient (interlayer distance: 10 mm). Three layers of aggregates of ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 300.0, which was good.

## Example 7

An electric field spinning solution of the polyurethane resin obtained in Example 1 was prepared, and a polyethylene terephthalate through-air non-woven fabric having a basis weight of 18 g/m$^2$ and a width of 1,000 mm was arranged as a base material nonwoven fabric (thickness: 60 $\mu$m), and electric field spinning of the polyurethane solution was performed thereon to prepare a fiber laminate formed of two layers including the base material nonwoven fabric and polyurethane resin ultrafine fibers. With regard to the polyurethane ultrafine fibers in the obtained fiber laminate formed of two layers, a basis weight in the layer was 3.0 g/m$^2$, a mean fiber diameter was 420 nm and a melting temperature was 175°C.

The fiber laminate formed of two layers was punched into a circular form having diameter of 63 mm, and three sheets of the fiber laminates formed of two layers and a carded through-air nonwoven fabric having a basis weight of 200 g/m$^2$, a thickness of 5 mm and a width of 1,000 mm were stacked so as to form a structure: "ultrafine fiber layer/base material layer B/base material layer A/base material layer A/ultrafine fiber layer/base material layer B/base material layer A/base material layer A/base material layer B/ultrafine fiber layer, " and the resulting material was taken as a sample for measuring a sound absorption coefficient (interlayer distance: 10.1 mm). Three layers of aggregates of ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 289.9, which was good.

## Example 8

Operation was performed in the same manner as in Example 1 except that four sheets of ultrafine laminates were used, so as to form a structure including four ultrafine fiber layers: (ultrafine fiber structure/base material B/base material B/ultrafine fiber structure/base material B/base material B/ultrafine fiber structure), and the resulting material was taken as a sample for measuring a sound absorption coefficient (interlayer distance: 0.12 mm). Four ultrafine fiber layers were contained therein, and therefore the number of the fiber layers was taken as "4."

A sound absorption coefficient at normal incidence was measured, and sound-absorbing property in a low frequency region (integrated value S from 200 Hz to 1,000 Hz) was evaluated, resulted in a value of 236.8, which was good.

## Example 9

Kynar 3120 was dissolved into a cosolvent of N,N-dimethylacetamide and acetone (60/40 (w/w)) at a concentration of 18% by mass to prepare an electric field spinning solution.

Next, a carded through-air nonwoven fabric having a basis weight of 200 g/m$^2$ and a width of 1, 000 mm (in which, sheath-core thermo-fusible conjugate fibers containing high density polyethylene and polypropylene as a sheath and a core and having a fiber diameter of 22 $\mu$m were used) was arranged as a base material nonwoven fabric, and electric field spinning of the PVDF-HFP solution was performed thereon to prepare a fiber laminate formed of two layers including base material nonwoven fabric A and PVDF-HFP ultrafine fiber layer.

Conditions of electric field spinning were adjusted, in which a 24 G needle was used, a single-bore solution feed rate was 3.0 mL/h, an applied voltage was 45 kV and a spinning distance was 12.5 cm.

With regard to PVDF-HFP ultrafine fibers in the obtained fiber laminate formed of two layers, a basis weight in the layer was 12.0 g/m$^2$, a mean fiber diameter was 300 nm and a melting temperature was 168°C. Four sheets of the fiber laminates were used, and so as to form a structure including four ultrafine fiber layers: (ultrafine fiber structure/base material A/ultrafine fiber structure/base material A/ultrafine fiber structure/base material A/ultrafine fiber structure/base material A), and the resulting material was taken as a sample for measuring a sound absorption coefficient (interlayer distance: 5 mm) . Four layers of aggregates of ultrafine fiber layers were contained therein, and therefore the number of the fiber layers was taken as "4."

A sound absorption coefficient at normal incidence was measured, and sound-absorbing property in a low frequency region (integrated value S from 200 Hz to 1,000 Hz) was evaluated, resulted in a value of 261.2, which was good.

**Example 10**

Operation was performed in the same manner as in Example 2 except that four sheets of fiber laminates, and base material nonwoven fabric A were used, so as to form a structure: "ultrafine fiber structure/base material A/base material A/ultrafine fiber structure/base material A/base material A/ultrafine fiber structure/base material A/base material A," and the resulting material was taken as a sample for measuring a sound absorption coefficient (interlayer distance: 10 mm) . Four layers of aggregates of ultrafine fiber layers were contained therein, and therefore the number of the fiber layers was taken as "4."

A sound absorption coefficient at normal incidence was measured, and sound-absorbing property in a low frequency region (integrated value S from 200 Hz to 1,000 Hz) was evaluated, resulted in a value of 385.5, which was good.

**Example 11**

Operation was performed in the same manner as in Example 4 except that six sheets of fiber laminates were used, so as to form a structure: "base material A/ultrafine fiber structure/ultrafine fiber structure/base material A/base material A/ultrafine fiber structure/ultrafine fiber structure/base material A/base material A/ultrafine fiber structure/ultrafine fiber structure/base material A/base material A," and the resulting material was taken as a sample for measuring a sound absorption coefficient (interlayer distance: 10 mm). Three layers of aggregates of ultrafine fiber layers were contained therein, and therefore the number of the fiber layers was taken as "3."

A sound absorption coefficient at normal incidence was measured, and sound-absorbing property in a low frequency region (integrated value S from 200 Hz to 1,000 Hz) was evaluated, resulted in a value of 320.5, which was good.

Table 1 shows a summary of Examples 1 to 11.

**Table 1**

Table 1

| | | | Example 1 | Example 2 | Example 3 | Example 4 | Example 5 |
|---|---|---|---|---|---|---|---|
| Ultrafine fiber layer | Ultrafine fibers | Number of layers | 3 | 3 | 3 | 3 | 3 |
| | Ultrafine fibers | Kind | PU | PU | PVDF | PU | PU |
| | Ultrafine fibers | Fiber diameter (nm) | 420 | 420 | 300 | 420 | 420 |
| Base material layer | Interlayer distance of ultrafine fiber layer (mm) | | 0.12 | 10 | 10 | 10 | 10 |
| Laminated sound-absorbing material | Air permeability (μm/Pa·s) | | 26.4 | 26.5 | 17.2 | 53.6 | 26.4 |
| | Total thickness (mm) | | 0.33 | 20.1 | 20.1 | 20.1 | 30.1 |
| | Integrated value from 200 Hz to 1,000 Hz | | 180.6 | 322.6 | 359.8 | 258.5 | 321.2 |
| | Acoustic absorption in low frequency region | | Good | Good | Good | Good | Good |

| | | | Example 6 | Example 7 | Example 8 | Example 9 | Example 10 | Example 11 |
|---|---|---|---|---|---|---|---|---|
| Ultrafine fiber layer | Ultrafine fibers | Number of layers | 3 | 3 | 4 | 4 | 4 | 3 |
| | Ultrafine fibers | Kind | PVDF | PU | PU | PVDF | PU | PU |
| | Ultrafine fibers | Fiber diameter (nm) | 180 | 420 | 420 | 300 | 420 | 420 |
| Base material layer | Interlayer distance of ultrafine fiber layer (mm) | | 10 | 10 | 0.12 | 5 | 10 | 10 |
| Laminated sound-absorbing material | Air permeability (μm/Pa·s) | | 310 | 199.5 | 19.7 | 25.4 | 19.8 | 26.7 |
| | Total thickness (mm) | | 20.2 | 20.2 | 0.37 | 20.1 | 30.1 | 30.1 |
| | Integrated value from 200 Hz to 1,000 Hz | | 300 | 298.9 | 236.8 | 261.2 | 385.5 | 320.5 |
| | Acoustic absorption in low frequency region | | Good | Good | Good | Good | Good | Good |

**Comparative Example 1**

A polyurethane resin (grade name: T1190) made by DIC Bayer Polymer Ltd. was dissolved into a cosolvent of N,N-dimethylformamide and acetone (60/40 (w/w)) at a concentration of 15% by mass to prepare an electric field spinning solution.

A polyethylene terephthalate through-air nonwoven fabric having a basis weight of 18 g/m$^2$ and a width of 1,000 mm was arranged as a base material nonwoven fabric (thickness: 60 μm), and electric field spinning of the polyurethane solution was performed thereon to prepare a fiber laminate formed of two layers including the base material nonwoven fabric and polyurethane ultrafine fibers.

Conditions of electric field spinning were adjusted, in which a 27 G needle was used, a single-bore solution feed rate was 2.0 mL/h, an applied voltage was 47 kV, and a spinning distance was 20 cm.

With regard to the polyurethane ultrafine fibers in the obtained fiber laminate formed of two layers, a basis weight in the layer was 10.0 g/m$^2$, a mean fiber diameter was 420 nm and a melting temperature was 175°C.

The obtained fiber laminate formed of two layers was cut into a piece having a major axis diameter of 252 mm and a minor axis diameter of 63 mm, and mountain folds and valley folds were repeated at an interval of 10 mm to perform pleating thereto. Paper having a width of 10 mm and a length of 197.8 mm was processed into a circular form in a major axis direction to prepare a frame made of paper. A periphery of the fiber laminate formed of pleated two layers was fixed with a commercially available silicon caulking material (chemical reaction-type adhesive made by Konishi Co., Ltd.) so as to be housed in the flame made of paper to obtain a sample for measuring a sound absorption coefficient.

A sound absorption coefficient at normal incidence was measured, and sound-absorbing property in a low frequency region (integrated value S from 200 Hz to 1,000 Hz) was evaluated, resulted in a value of 50.5, and no obtaining of sound-absorbing property, which was poor. A peak of absorption characteristic was 3,200 Hz or more.

**Comparative Example 2**

A commercially available polypropylene resin nonwoven fabric (Thinsulate T2203 made by 3M Japan Limited, fiber diameter: 0.7 $\mu$m to 4.0 $\mu$m, thickness: 29 mm) was punched into a circular form having a diameter of 63 mm, and the resulting material was taken as sample 12 for measuring a sound absorption coefficient.

A sound absorption coefficient at normal incidence was measured, and sound-absorbing property in a low frequency region (integrated value S from 200 Hz to 1,000 Hz) was evaluated, resulted in a value of 129.3, and no obtaining of sound-absorbing property, which was poor.

**Comparative Example 3**

Operation was performed in the same manner as in Example 4 except that two sheets of fiber laminates formed of two layers were used, so as to form one layer (base material A/ultrafine fiber structure/ultrafine fiber structure/base material A) in an ultrafine fiber layer, and the resulting material was taken as a sample for measuring a sound absorption coefficient. One layer of an aggregate of the ultrafine fiber layer was contained therein, and therefore the number of the fiber layers was taken as "1."

A sound absorption coefficient at normal incidence was measured, and sound-absorbing property in a low frequency region (integrated value S from 200 Hz to 1,000 Hz) was evaluated, resulted in a value of 54.8, and no obtaining of sound-absorbing property, which was poor.

**Comparative Example 4**

A polyurethane resin (grade name: T1190) made by DIC Bayer Polymer Ltd. was dissolved into a cosolvent of N,N-dimethylformamide and acetone (60/40 (w/w)) at a concentration of 15% by mass to prepare an electric field spinning solution.

Next, a carded through-air nonwoven fabric having a basis weight of 200 g/m$^2$, a thickness of 5 mm and a width of 1,000 mm (in which, a sheath-core thermo-fusible conjugate fibers containing high density polyethylene and polyethylene terephthalate as a sheath and a core and having a fiber diameter of 22 $\mu$m was used) was arranged as a base material nonwoven fabric, and electric field spinning of the polyurethane solution was performed thereon to prepare a fiber laminate formed of two layers including base material nonwoven fabric A and polyurethane ultrafine fibers.

Conditions of electric field spinning were adjusted, in which a 27 G needle was used, a single-bore solution feed rate was 2.0 mL/h, an applied voltage was 47 kV, and a spinning distance was 20 cm.

With regard to the polyurethane ultrafine fibers in the obtained fiber laminate formed of two layers, a basis weight in the layer was 20.0 g/m$^2$, a mean fiber diameter was 420 nm and a melting temperature was 175°C.

The fiber laminate was punched into a circular form having a diameter of 63 mm, and two sheets of the fiber laminates were stacked so as to form a structure: "ultrafine fiber structure/base material A/base material A/ultrafine fiber structure," and the resulting material was taken as a sample for measuring a sound absorption coefficient. Two layers of aggregates of ultrafine fiber layers were contained therein, and therefore the number of the fiber layers was taken as "2."

A sound absorption coefficient at normal incidence was measured, and sound-absorbing property in a low frequency region (integrated value S from 200 Hz to 1,000 Hz) was evaluated, resulted in a value of 156.2. A peak of absorption characteristics was around 3,000 Hz. Table 2 shows a summary of Comparative Examples 1 to 4.

**Table 2**

Table 2

| | | | Comparative Example 1 | Comparative Example 2 | Comparative Example 3 | Comparative Example 4 |
|---|---|---|---|---|---|---|
| Ultrafine fiber layer | Ultrafine fibers | Number of layers | 1 | 1 | 1 | 2 |
| | Ultrafine fibers | Kind | PU | PP | PU | PU |
| | Ultrafine fibers | Fiber diameter (nm) | 420 | 700 to 4,000 | 420 | 420 |
| Base material layer | Interlayer distance of ultrafine fiber layer (mm) | | - | 0 | - | 10 |
| Laminated sound-absorbing material | Air permeability ($\mu$m/Pa·s) | | - | 980 | 81 | 40.5 |
| | Total thickness (mm) | | 9.6 | 29 | 10.0 | 10.1 |
| | Integrated value from 200 Hz to 1,000 Hz | | 50.5 | 129.3 | 54.8 | 156.2 |
| | Acoustic absorption in low frequency region | | Poor | Poor | Poor | Poor |

**Industrial Applicability**

A laminated sound-absorbing material of the invention is particularly excellent in sound-absorbing property in a low frequency region, and therefore may be used as a sound-absorbing material in a field where noise in the low frequency region poses a problem. Specifically, the sound-absorbing material may be used as the sound-absorbing material used for a ceiling, a wall and a floor of a housing or the like, a soundproofing wall for a highway, a railway or the like, a soundproofing material for home appliances, the sound-absorbing material arranged in each part of a vehicle such as a railway vehicle and an automobile, or the like.

**Claims**

1. A laminated sound-absorbing material, **characterized in that** the laminated sound-absorbing material containing a plurality of fiber layers, and a base material layer existing between the fiber layer and the fiber layer, wherein the laminated sound-absorbing material contains at least three fiber layers, and each fiber layer is formed of fibers having a fiber diameter of less than 450 nanometers and a basis weight of 0.1 to 50 g/m$^2$, and the base material layer has a basis weight of 1 g/m$^2$ or more and a thickness of 0.1 millimeter or more, and the base material layer is at least one selected from the group of a nonwoven fabric, a film, a glass fiber and paper.

2. The laminated sound-absorbing material according to claim 1, wherein the fiber layer has a basis weight of 0.1 g/m$^2$ to 25 g/m$^2$.

3. The laminated sound-absorbing material according to claim 1 or 2, wherein a base material that forms the base material layer is a nonwoven fabric formed of at least one kind selected from the group of polyethylene phthalate fibers, polybutylene terephthalate fibers, polyethylene fibers and polypropylene fibers, and a basis weight of the base material is 1 to 300 g/m$^2$.

4. The laminated sound-absorbing material according to any one of claims 1 to 3, wherein fibers that form the fiber layer are at least one kind selected from the group of polyvinylidene fluoride, nylon 6,6, polyacrylonitrile, polystyrene, polyurethane, polysulfone and polyvinyl alcohol.

5. The laminated sound-absorbing material according to any one of claims 1 to 4, wherein, when a sound absorption coefficient from 200 Hz to 3,200 Hz in a frequency x is measured at a 1 Hz interval in a method of measuring a sound absorption coefficient at normal incidence (200 to 1,000 Hz), and an obtained curve is taken as f(x), value S obtained by integrating the sound absorption coefficients from 200 Hz to 1,000 Hz is in a range that satisfies the following formula:

$$S = \int_{200}^{1000} f(x)\, dx \geq 170$$

6. The laminated sound-absorbing material according to any one of claims 1 to 4, wherein, when a sound absorption coefficient in a method of measuring a sound absorption coefficient at normal incidence (200 to 1,000 Hz) is taken as f(x), value S obtained according to the following formula is in a range that satisfies the following formula:

$$S = \int_{200}^{1000} f(x)\, dx \geq 200$$

FIG. 1

## INTERNATIONAL SEARCH REPORT

| International application No. |
| --- |
| PCT/JP2018/003659 |

**A. CLASSIFICATION OF SUBJECT MATTER**
Int.Cl. G10K11/16(2006.01)i, B32B5/26(2006.01)i, G10K11/168(2006.01)i

According to International Patent Classification (IPC) or to both national classification and IPC

**B. FIELDS SEARCHED**

Minimum documentation searched (classification system followed by classification symbols)
Int.Cl. G10K11/16, B32B5/26, G10K11/168

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-121426 A (PANASONIC IP MANAGEMENT CO., LTD.) 07 July 2016, paragraphs [0014]-[0019], [0053]-[0063], [0088]-[0089], [0098], fig. 1, 2 & JP 5866625 B1 & WO 2016/103646 A1 | 1-6 |
| A | JP 2013-180474 A (NAOYA OILCHEMICAL CO., LTD.) 12 September 2013, entire text, all drawings (Family: none) | 1-6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 April 2018 (09.04.2018) | 17 April 2018 (17.04.2018) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011508113 A
- JP 2014015042 A
- JP 2008537798 A
- JP 2016121426 A